# EUROPEAN PATENT APPLICATION

(11) **EP 1 359 744 A2**
(43) Date of publication of application: **05.11.2003**
(21) Application number: 03251783.1
(22) Date of filing: 21.03.2003
(51) Int. Cl.: H04N 5/00

(54) **Set top box and associated method of operation to facilitate display of locally sourced display data**

(30) Priority: 30.04.2002 US 135716
(71) Applicant: ATI Technologies Inc., Markham, Ontario L3T 7X6 (CA)
(72) Inventor: Callway, Edward G., Toronto, Ontario M4S 1B3 (CA)
(74) Representative: Howe, Steven

(57) **Abstract**

A display system employs a set top box and an associated method of operation to facilitate display of locally sourced display data. The sct top box includes a radio signal receiver, a wireless receiver, a display interface, and one or more optional decoders. The radio signal receiver receives a broadcast signal from a remote broadcast source over an associated communication link. The wireless receiver receives a wireless signal from a local source over a wireless communication link. Both the broadcast signal and the wireless signal include encoded display data, such as MPEG-encoded video and/or graphics. The decoder(s), when used, decodes the encoded data contained in both signals to extract the respective display data, and the display interface provides the extracted display data to a display device. Alternatively, the decoder may reside in the display device, in which case, the display interface provides the encoded data directly to the display device.

## Description

The present invention relates generally to set top boxes and, more particularly, to a set top box and associated method of operation that facilitate display of graphics and/or video data sourced by a local wireless device.

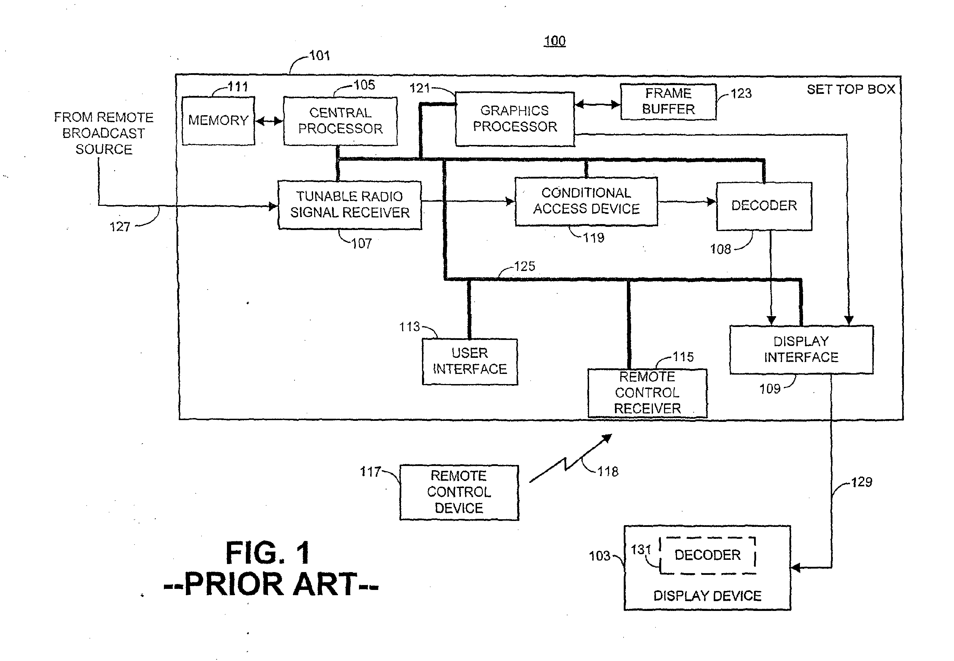

Set top boxes are well known devices that are used for receiving cable television and direct broadcast satellite (DBS) signals and, if necessary, processing the signals for display on the set top box user's television set. In this manner, set top boxes form one part of a typical video and graphics display system. Such a typical display system 100 is depicted in block diagram form in FIG. 1. As shown, the display system 100 includes a set top box 101 and a display device 103. The set top box 101 includes a central processor 105, a tunable radio signal receiver 107, a decoder 108, a display interface 109, memory 111, and a user interface 113. The central processor 105 is typically a low speed microprocessor that communicates with the other set top box elements via a signaling bus 125. The tunable radio signal receiver 107 is a radio frequency (RF) receiver that may be tuned to any one of several channels in response to control signaling from the central processor 105. The decoder 108 is a known device that decodes received video and/or graphics data that has been encoded using one of a variety of standard video encoding algorithms, such as algorithms implementing any version of the Motion Picture Experts Group (MPEG) standard (e.g., MPEG1, MPEG2, MPEG3, or MPEG4), algorithms implementing the National Television Standards Committee (NTSC) standard, algorithms implementing the Phase Alternate Line (PAL) standard, or algorithms implementing the Sequential Couleur Avec Memoire (SECAM) standard. The display interface 109 is a hardware and software interface that performs functions such as blending, scaling, and/or overlaying received video and/or graphics data with graphics data generated internally by the set top box 101. The memory 111 typically includes read only memory (ROM) and random access memory (RAM). ROM is used to store operating instructions for the central processor 105 and RAM is typically used to store the set top box address, de-scrambling codes, and various other less permanent information. The user interface 113 is typically a keypad or keyboard.

If the set top box 101 facilitates remote control by its user, the set top box 101 further includes a remote control receiver 115 to receive remote control signals from a remote control device 117 over a control link 118, such as an infrared link. Some set top boxes 101 also include a conditional access device 119, such as a de-scrambler or a decryption module, that may be enabled/disabled from the remote broadcast source or through use of the remote control device 117 or the user interface 113. The conditional access device 119 allows the system user to receive special event signals (e.g., pay-per-view programming) and may also allow the user to block certain signals (e.g., invoke parental control to block display of any programs with mature ratings).

Some set top boxes 101 also enable their users to graphically display certain information, such as channel, time of day, menus, television settings, and so forth. To facilitate such graphics displays, the set top box 101 includes all necessary elements of a graphics subsystem, such as a graphics processor 121 and a frame buffer 123. The central processor 105 issues drawing instructions or commands to the graphics processor 121 responsive to receiving a request to display graphics information from either the user interface 113 or the remote control receiver 115 via the bus 125. The graphics processor 121 renders the graphics images responsive to the drawing commands, stores the rendered images in the frame buffer 123 until a frame of images has been stored, extracts the frame from the frame buffer 123, and provides the frame of graphics display data (e.g., pixel data) to the display interface 109 in accordance with known techniques. When the set top box 101 generates its own graphics as discussed above, the display interface 109 typically includes blending and/or overlay circuitry to enable both the graphics generated by the set top box 101 and the graphics and/or video received from the remote broadcast source to be simultaneously displayed on the display device 103.

The display device 103 is a television that can display either encoded or decoded signals. For example, if the display device 103 can only display decoded pixel data (e.g., an RGB or Y, Pr, Pb monitor with no tuner), the set top box 101 must include the aforementioned decoder 108 to extract the pixel data from the encoded (e.g., MPEG, NTSC, PAL, or SECAM) data. On the other hand, if the display device 103 is a high definition television (HDTV) or a cable-ready television, the display device 103 may include a decoder 131 (e.g., an MPEG decoder or an NTSC decoder) and can thereby display encoded data received from the set top box 101.

The set top box 101 receives several broadcast signals simultaneously over a communication link 127, such as a cable plant or a DBS link, from a remote broadcast source. The bandwidth of the downstream link 127 from the remote broadcast source is typically in the 1-30 Megahertz (MHz) range. However, the bandwidth of the link 129 between the display interface 109 and the display device 103 is typically much higher (e.g., greater than 1 Gigabit), particularly in HDTVs. Accordingly, the remote broadcast source typically encodes the video and/or graphics data contained in its broadcast signals to increase the throughput of the narrower downstream link 127 to more closely match the throughput of the display link 129 .

Although prior art set top boxes 101 are adequate for displaying received broadcast video and/or graphics and may generate some of their own graphics data, they provide no means for displaying graphics and/or video data provided by a local source, such as the set top box user's personal or laptop computer. For instance, the set top box user may be watching a football game and want to display team statistics from an Internet web site in a small area of the screen simultaneously. Prior art set top boxes 101 do not enable a user to display both received remotely broadcast signals and video and/or graphics data sourced locally with respect to the location of the set top box 101.

The known WEB TV system enables a television set to be used as a display device for purposes of Internet browsing, and requires a unique keyboard and other equipment to use the WEB TV service. Many set top box users use a separate personal computer, laptop computer, palmtop computer, personal digital assistant (PDA), or, more recently, Internet-capable cellular phone or pager to access the Internet, and, therefore, do not subscribe to the WEB TV service, but would like to be able to display both remote broadcast signals and video and/or graphics retrieved from the Internet on their television screens. In addition, users may also desire to display graphics generated by non-Internet-related computer applications (e.g., word processing or spreadsheet applications) on their televisions while watching a television show. Since the Internet is not the source of such locally-generated graphics, the WEB TV system would not provide a solution to such a desire. Therefore, a need exists for a set top box and an associated method of operation that facilitate display of locally sourced display data on a display device operably coupled to the set top box. A set top box that facilitated such display of locally sourced display data without requiring specialized equipment external to the set top box and the local source themselves would be a further improvement over the prior art.

According to a first aspect of the present invention, a set top box operably coupleable to a display device via a first communication link, comprises:
a radio signal receiver that receives a broadcast signal from a remote broadcast source over a second communication link, the broadcast signal including first encoded display data;
a wireless receiver that receives second encoded display data from a local source over a third communication link;
at least one decoder, operably coupled to the wireless receiver and the radio signal receiver, that decodes at least one of the first encoded display data to produce first display data and the second encoded display data to produce second display data; and
a display interface, operably coupled to the decoder, that provides the first display data and the second display data to the display device over the first communication link.

According to a second aspect of the present invention, a set top box that is operably coupleable to a display device via a first communication link, the display device including a decoder for decoding encoded display data, comprises:
a radio signal receiver that receives a broadcast signal from a remote broadcast source over a second communication link to produce a received broadcast signal, the broadcast signal including first encoded display data;
a wireless receiver that receives second encoded display data from a local source over a third communication link; and
a display interface, operably coupled to the radio signal receiver and the wireless receiver, that provides the first encoded display data and the second encoded display data to the display device via the first communication link.

According to a third aspect of the present invention, a wireless display system comprises:
a local display data source including:
   a central processor that issues drawing commands to draw graphics primitives:
   a graphics processor, operably coupled to the central processor, that receives the drawing commands and renders the graphics primitives to produce a graphics data stream;
   an encoder, operably coupled to the graphics processor, that encodes the graphics data stream to produce second encoded display data; and
   a wireless transmitter, operably coupled to the encoder, that transmits the second encoded display data over a third communication link; and
a set top box according to the first or second aspect of the present invention.

According to a fourth aspect of the present invention, a method for a set top box to facilitate display of locally sourced display data on a display device operably coupled to the set top box, comprises the steps of:
receiving a broadcast signal from a remote broadcast source over a second communication link, the broadcast signal including first encoded display data;
receiving second encoded display data over a third communication link from a local source;
decoding at least one of the first encoded display data and the second encoded display data to produce display data; and
providing the decoded display data to the display device over a first communication link.

According to a fifth aspect of the present invention, a method for a set top box to facilitate display of locally sourced display data on a high definition display device coupled to the set top box, the high definition display device including a decoder that decodes in accordance with a Motion Picture Experts Group (MPEG) decoding specification, comprises the steps of:
receiving a broadcast signal from a remote broadcast source over a first communication link, the broadcast signal including first MPEG-encoded display data;
receiving a wireless signal from a local source over a second communication link, the wireless signal including second MPEG-encoded display data;
selecting at least one of the broadcast signal and the wireless signal to produce at least one selected signal; and
providing the at least one selected signal to the high definition display device over a third communication link for decoding by the decoder, wherein the third communication link has a bandwidth that is substantially greater than individual bandwidths of the first communication link and the second communication link.

The present invention will be described, by way of example, with reference to the accompanying drawings, in which;
FIG. 1 is a block diagram of a conventional set top box display system.
FIG. 2 is a block diagram of a wireless display system in accordance with the present invention.
FIG. 3 is a logic flow diagram of steps executed by a set top box to facilitate display of locally generated display data in accordance with a preferred embodiment of the present invention.
FIG. 4 is a logic flow diagram of steps executed by a set top box to facilitate display of locally generated display data in accordance with an alternative embodiment of the present invention.

Generally, the present invention encompasses a set top box and an associated method of operation that facilitate display of locally sourced display data on a display device operably coupled to the set top box. The set top box includes a radio signal receiver, a wireless receiver, at least one decoder and a display interface. The radio signal receiver receives a broadcast signal from a remote broadcast source, such as a cable headend or a direct broadcast satellite (DBS) transmission facility, over a corresponding communication link. The broadcast signal includes encoded display data, such as MPEG-encoded video and/or graphics. The wireless receiver receives a wireless signal from a local source, such as a personal or laptop computer, over a wireless communication link. Similar to the broadcast signal, the wireless signal includes encoded display data. The decoder(s) decodes the encoded display data contained in the broadcast and wireless signals to extract the respective display data, and the display interface provides the extracted display data to the display device over a high bandwidth communication link. Alternatively, the decoder may reside in the display device, in which case, the display interface provides the encoded display data received in the broadcast and wireless signals directly to the display device.

By providing a set top box that operates in such a manner, the present invention facilitates the display of locally sourced video and/or graphics data on a display device without requiring any inputs on the display device to permit connection of the local source and/or without requiring the local source to directly connect to the display device in the event the display device permits such connection. Basically, the present invention facilitates a display system in which a wireless local graphics and/or video source, such as a laptop computer or a personal computer (PC) containing a wireless modem, can display graphics and/or video on a display device, such as a high definition television (HDTV), coupled to the set top box. Unlike prior art set top boxes that include only a tunable radio signal receiver to receive broadcast signals from a broadcast source, such as a cable headend or a DBS transmission facility, and may optionally include their own graphics generation subsystems (e.g., central processor, graphics processor, and frame buffer) to generate graphics of certain data requested for display by their users, the set top box of the present invention further includes a wireless receiver to receive wireless signals from the local video and/or graphics source. Thus, the present invention enables users to display their own computer-generated or computer-acquired (e.g., via the Internet) graphics and/or video on their television set with only the need for a wireless modem (e.g., a PC card modem) in their computer. Therefore, instead of having to view an Internet website on a 15, 17 or even 19-inch monitor, a user can view it on his or her much larger television screen. Moreover, in contrast to WEB TV, no special keyboard or other equipment is necessary and the user need not limit his or her use of the television to Internet access. Rather, the user can use his or her own computer to access Internet sites, while using his or her television to simultaneously watch cable or DBS television shows and display Internet-acquired graphics and/or video.

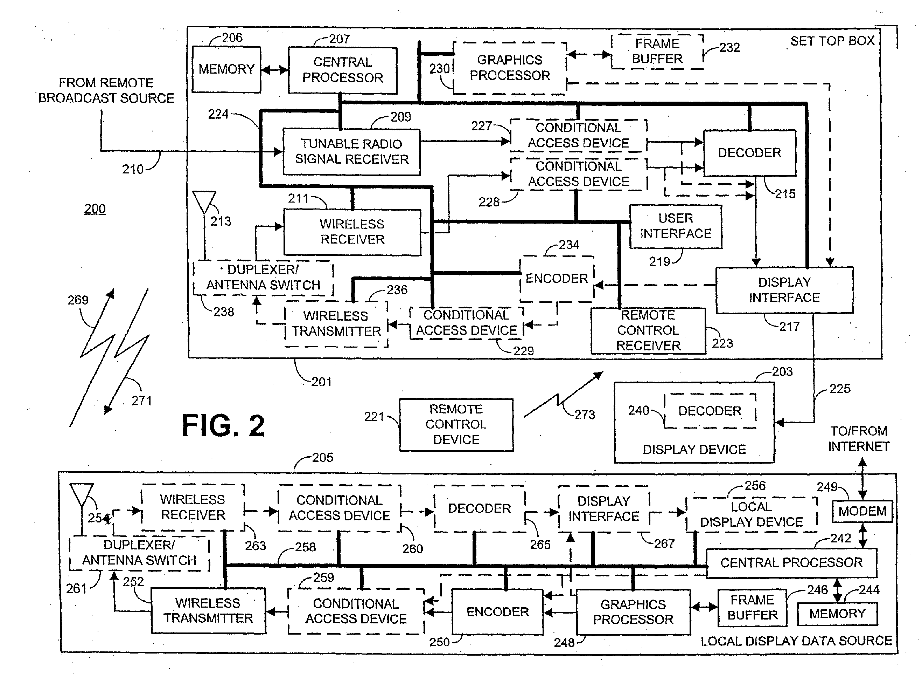

The present invention can be more fully understood with reference to FIGs. 2-4, in which like reference numerals designate like items. FIG. 2 is a block diagram of a wireless display system 200 in accordance with the present invention. The display system 200 includes a set top box 201, a display device 203, and a local display data source 205. Similar to the prior art set top box 101 of FIG. 1, the set top box 201 of the present invention includes a central processor 207, a tunable radio signal receiver 209, a decoder 215, a display interface 217, memory 206, a user interface 219, a remote control receiver 223, a bus 224, an optional conditional access device 227, and an optional graphics processor 230 and frame buffer 232. However, in contrast to the prior art set top box 101, the set top box 201 of the present invention further includes an antenna 213 and a wireless receiver 211 operably coupled to the decoder 215 or another decoder (where multiple decoders are used). In addition, in contrast to the prior art set top box 101, the set top box 201 of the present invention optionally includes one or more additional conditional access devices 228, 229, an encoder 234, a wireless transmitter 236, and/or a duplexer/antenna switch 238.

The local display data source 205 may be a laptop computer, a personal computer, a workstation, a personal digital assistant (PDA), a palmtop computer, or any other device constructed to wirelessly transmit video and/or graphics data for display on an external display device. The local display data source 205 preferably includes or is operably coupled to a central processor 242, memory 244, a graphics processor 248, a frame buffer 246, an encoder 250, a wireless transmitter 252, an antenna 254, a modem 249, and a bus 258. The local display data source 205 may optionally also include or be operably coupled to one or more conditional access devices 259, 260, a duplexer/antenna switch 261, a wireless receiver 263, a decoder 265, a display interface 267, and a local display device 256.

The display device 203 may be any conventional cathode ray tube (CRT) display, liquid crystal display (LCD), or other display. For example, the display device 203 may be a standard cable-ready or high definition television (HDTV). In one embodiment, the display device 103 may be a high definition television that includes a decoder 240 (e.g., an MPEG decoder) and thereby can display encoded data received from the set top box 201.

The central processors 207, 242 of the set top box 201 and the local display data source 205 are each preferably implemented as one or more microprocessors, digital signal processors (DSPs), microcontrollers, or other processing devices that process information based on operational or programming instructions. The memories 206, 244 may include various forms of memory, such as read only memory (ROM), random access memory (RAM), floppy disks, CD-ROMs, a hard disk drive, digital versatile disks (DVDs), flash memory cards, or any other medium for storing digital information. The memories 206, 244 are preferably used to store programming and/or operational instructions that, when executed by the central processors 207, 242, enable the central processors 207, 242 to perform the respective functions. The memories 206, 244 may also be used to store set top box addresses, de-scrambling codes, and various other information.

The graphics processors 230, 248 are preferably embodied in application specific integrated circuits (ASICs) and may include a single processing entity or multiple processing entities. Such a processing entity may be a microprocessor, a microcontroller, a DSP, a state machine, logic circuitry, or any other device that processes information based on operational or programming instructions. One of ordinary skill in the art will recognize that when one or both of the graphics processors 230, 248 have one or more of their functions performed by a state machine or logic circuitry, the memory containing the corresponding operational instructions may be embedded within the state machine or logic circuitry. The graphics processors 230, 248 may be located on respective video cards together with their respective frame buffers 232, 246 and/or other local memory that is accessed and used regularly by the graphics processors 230, 248. The frame buffers 232, 246 are preferably memory devices, such as dynamic RAMs (DRAMs) , static RAMs (SRAMs) or any other suitable memory device.

The decoders 215, 240, 265 are preferably decoders that decode received video and/or graphics data that has been encoded in accordance with a digital standard such as any version of the Motion Picture Experts Group (MPEG) encoding specification (e.g., MPEG1, MPEG2, MPEG3, or MPEG4). Alternatively, the decoders 215, 240, 265 may decode in accordance with an analog standard or specification such as NTSC, PAL and SECAM. The decoders 215, 240, 265 may be implemented in hardware and/or software in accordance with known techniques. The display interfaces 217, 267 preferably include known circuits and/or software modules that implement display-related combining functions, such as blending, scaling, keying and overlaying.

Conditional access devices 229 and 259 include known hardware and software to scramble, encrypt or otherwise protect encoded display data from being received and decoded by unauthorized persons. Conditional access devices 260, 228, and 227 include known hardware and software to de-scramble, decrypt or otherwise undo the protection from unauthorized use introduced by conditional access devices 229 and 259 or at a remote broadcast source. Conditional access device 227 may be enabled/disabled from the remote broadcast source or through use of the remote control device 221 or the user interface 219. Similarly, conditional access device 228 may be enabled/disabled from the local display data source 205 or through use of the remote control device 221 or the user interface 219. The conditional access devices 227-229, 259, 260 allow the system user and/or the remote broadcast operator to control the intended targets of transmitted display data. Conditional access devices are well known in the art; thus, no further discussion of them will be presented except to facilitate an understanding of the present invention.

The wireless receivers 211, 263 may be radio frequency (RF) receivers, microwave receivers, or optical receivers depending on the type of medium selected for wireless links 269 and 271 (i.e., RF, microwave or optical). Analogously, the wireless transmitters 236, 252 may be RF, microwave, or optical transmitters depending on the type of medium selected for the wireless links 269, 271. The antennas 213, 254 may include a single antenna element or multiple antenna elements (e.g., an array). The duplexer/antenna switches 238, 261 may be known PIN diodes or other switches to implement antenna switches for half-duplex operation or known arrangements of filters to implement duplexers for full duplex operation. The combination of wireless transmitter 252, wireless receiver 263, antenna 254, and duplexer/antenna switch 261, and the combination of wireless transmitter 236, wireless receiver 211, antenna 213, and duplexer/antenna switch 238 may each be implemented as a wireless modem. Such a wireless modem may be fabricated on an insertable personal computer card, such as a Personal Computer Memory Card International Association (PCMCIA) card, that may be inserted into an appropriate interface slot of the local display data source 205 or the set top box 201. Wireless modems are well known; thus no further discussion of them will be presented except to facilitate an understanding of the present invention. Alternatively, the wireless transmitters 236, 252, the wireless receivers 211, 263, the antennas 213, 254, and the duplexer/antenna switches 238, 261 may be separately implemented in hardware and/or software, as appropriate, in accordance with known techniques. One of ordinary skill in the art will recognize that all or most of the functions of the wireless transmitters 236, 252 and/or the wireless receivers 211, 263 may be collectively implemented in a processor. However, the wireless transmitters 236, 252 and the wireless receivers 211, 263 have been functionally partitioned in FIG. 2 to facilitate a better understanding of the present invention.

The encoders 234, 250 are preferably digital encoders that encode video and/or graphics data in accordance with any one of the versions of the MPEG encoding specification (e.g., MPEG1, MPEG2, MPEG3, or MPEG4). Alternatively, the encoders 234, 250 may encode in accordance with an analog standard or specifications such as NTSC, PAL and SECAM. The encoders 234, 250 may be implemented in hardware and/or software in accordance with known techniques.

The tunable radio signal receiver 209 is an RF or microwave receiver that may be tuned to any one of several channels in response to control signaling from the central processor 207. Since the remote broadcast source is preferably a cable headend or DBS transmission facility, the tunable radio signal receiver 209 is preferably a cable television receiver or a DBS receiver depending on the particular remote broadcast source. The user interface 219 of the set top box 201 may be a keypad, a keyboard, voice control or other human interface device. When the set top box 201 facilitates the use of a remote control device 221, the set top box 201 includes a remote control receiver 223. The remote control receiver 223 is a wireless (e.g., RF, microwave, or optical (e.g., infrared)) receiver configured to receive control signals transmitted from the remote control device 221 over a wireless control link 273. The tunable signal receiver 209, the user interface, and the remote control receiver 223 are all well known in the art.

The local display data source 205 preferably includes a modem 249 or other means that allows the local display data source 205 to acquire video and/or graphics data from a remote network, such as the Internet. The modem 249 may be a modem for use with a wireline connection, such as a telephone port connection, a cable access connection, or a connection to one of various other wireline communication services, such as an integrated services digital network (ISDN) or a digital subscriber line (DSL). Alternatively, the modem 249 may be a wireless modem as described above with respect to the wireless transmitter 252 and wireless receiver 263 of the local display data source 205. The modem 249 may be internal to or external to (i.e., operably coupled to) the local source 205.

The set top box 201 receives several broadcast signals simultaneously over a communication link 210, such as a cable plant or a DBS link, from the remote broadcast source. The bandwidth of the downstream link 210 from the remote broadcast source is typically in the 1-30 Megahertz (MHz) range. However, the bandwidth of the link 225 between the display interface 217 and the display device 203 is typically much higher (e.g., greater than 1 Gigabit), particularly in HDTVs. The wireless link 269 between the local source 205 and the set top box 201 is preferably a low bandwidth link (in the 1-30 MHz range) as compared to the bandwidth of the link 225 between the set top box 201 and the display device 203. Consequently, the display data sourced by the local source 205 is preferably encoded using one of a variety of known encoding techniques, such as any version of the known MPEG encoding standard, prior to transmission to the set top box 201 in order to account for the data rate/bandwidth mismatch in the two links 269, 225.

Operation of the wireless video and/or graphics display system 100 occurs substantially as follows in accordance with the present invention. A group of broadcast signals are received from a remote broadcast source, such as a cable headend or a DBS broadcast facility, over communication link 210 as inputs to the tunable radio signal receiver 209. The tunable radio signal receiver 209 demodulates, filters and otherwise processes one of the received broadcast signals responsive to input from the central processor 207 to extract encoded display data embodied in the selected signal. As used herein, the term display data refers to video and/or graphics data.

The central processor 207 selects the broadcast signal (channel) to be received based on input from the set top box user in accordance with known techniques. For example, the central processor 207 may receive a channel selection from the user interface 219 or from the remote control receiver 223 depending on which user input device was used to select the channel to be viewed. The channel selection is communicated from the user interface 219 or remote control receiver 223 to the central processor 207 and from the central processor 207 to the tunable radio signal receiver 209 via the bus 224. To provide remote control inputs, the set top box user utilizes the remote control device 221 to send commands over a remote control link 273 (e.g., an RF link or an optical link) to the remote control receiver 223 of the set top box 201. The received commands are communicated to the central processor 207 over the bus 224 or by some other known means.

One of ordinary skill in the art will appreciate that multiple tunable radio signal receivers may be implemented in the set top box 201 to thereby enable multiple broadcast signals to be simultaneously demodulated and otherwise processed. Such multiple tunable radio signal receivers may be beneficially used when the set top box 201 is coupled to a display device 203 that supports picture-in-picture (PIP) display.

The selectively received broadcast signal is preferably provided to the decoder 215 either directly or optionally via a conditional access device 227. A conditional access device 227 may be included when one or more of the potentially receivable broadcast signals is scrambled or encrypted in accordance with known techniques to prevent unauthorized reception. The conditional access device 227 may also include parental control capabilities and may be remotely enabled/disabled for pay-per-view programming in accordance with known techniques.

In addition to receiving broadcast signals over link 210, the set top box 201 also preferably receives a wireless signal over wireless link 269. The wireless signal is transmitted by the local display data source 205 (e.g., a personal computer, a laptop computer, a PDA, or any other device having video and/or graphics display and wireless transmission capabilities). The wireless link 269 preferably comprises a radio frequency (RF), microwave or optical (e.g., infrared) link operating in accordance with one of a variety of known wireless transmission and networking standards, such as the Institute of Electrical and Electronic Engineers (IEEE) 802.11 wireless local area network (LAN) protocol standard or the home phoneline network alliance (HPNA) 2.0 networking specification. The wireless link 269 preferably has a bandwidth in the range of approximately one to approximately thirty Megahertz (i.e., about 1-30 MHz) to accommodate transmissions of MPEG-encoded video signals. Alternatively, the wireless link 269 may have a lower bandwidth and operate in accordance with the Bluetooth transmission standard in the event that only static or pseudo-static graphics or highly compressed video will be communicated to the set top box 201.

Antenna 213 receives the wireless signal communicated over link 269 and provides the received signal to the wireless receiver 211 either directly or optionally via a duplexer/antenna switch 238. The duplexer/antenna switch 238 is only necessary to facilitate duplex or half-duplex communications and is used, if at all, when the set top box 201 includes an optional wireless transmitter 236, which will be described below. Similar to the tunable radio signal receiver 209, the wireless receiver 211 demodulates, filters and otherwise processes the received wireless signal to extract encoded display data embodied in the signal. The wireless receiver 211 may be tunable under the control of the central processor 207, but is preferably a fixed-tuned receiver capable of detecting and processing all signals transmitted over the wireless link 269. Both the tunable radio signal receiver 209 and the wireless receiver 211 may be enabled/disabled by signaling from the central processor 207 over the bus 224 in response to user input via the user interface 219 and/or the remote control device 221. Thus, the system user may select one or both of the received wireless and broadcast signals for display on the display device 203.

The received wireless signal is preferably provided to the decoder 215 either directly or optionally via a conditional access device 228. A conditional access device 228 may be included when the wireless signal is scrambled or encrypted to prevent unauthorized reception. One of ordinary skill in the art will appreciate that multiple decoders 215 may be included in the set top box 201 depending on implementation. For example, one decoder may be dedicated to serving the broadcast signals and another decoder may be dedicated to serving the wireless signals. Separate decoders would likely be necessary when different encoding techniques were used to encode the display data communicated over the broadcast and wireless links 210, 269. In the preferred embodiment, both the broadcast signals emanating from the remote broadcast source and the wireless signals emanating from the local display data source 205 include display data encoded using the same encoding technique (preferably in accordance with one of the versions of the well-known Motion Picture Experts Group (MPEG) encoding specification). Consequently, a single decoder 215 may be used to decode the encoded display data received over both communication links 210, 269.

As noted above, the decoder 215 preferably decodes the encoded display data received from the tunable radio signal receiver 209 and/or the wireless receiver 211 (optionally via respective conditional access devices 227, 228) in accordance with an MPEG decoding specification, and provides the original display data (in pixel data format) to the display interface 217. The display interface 217, operating under the control of the central processor 207, either forwards the original display data to the display device 203 over wideband link 225 or performs some known combining function, such as blending and/or overlaying, on the display data received from the decoder 215 (or decoders where multiple decoders are necessary as described above) and from some other source (e.g., the graphics processor 230).

For example, the set top box 201 may optionally include graphics generation capability (e.g., central processor 207, graphics processor 230 and frame buffer 232) to create graphics in response to external input. In such a case, the central processor 207 issues commands to draw graphics primitives, such as lines, points, triangles, and polygons, to the graphics processor 230 responsive to control signaling from the remote broadcast source or, more typically, responsive to user input via the user interface 219 or the remote control receiver 223. The graphics processor 230 receives the drawing commands and renders graphics primitives in accordance with the commands. The primitives are stored temporarily in the frame buffer 232 and are read from the frame buffer 232 by the graphics processor 230 based on timing information issued by the central processor 207 over the bus 224. Generation of graphics in set top boxes is well known; thus, no further discussion will be presented except to facilitate an understanding of the present invention. The graphics data read from the frame buffer 232 is provided to the display interface 217 by the graphics processor 230. Having received display data from both the decoder 215 and the graphics processor 230, the display interface 217 performs a known combining function on the received display data, such as blending, scaling and/or overlaying, and provides pixel data implementing the combining function to the display device 203 over the wideband link 225. The timing at which the display interface 217 outputs the combined display data is controlled by the central processor 207 in accordance with a refresh rate of the display device 203.

In an alternative embodiment, the set top box 201 either may not include a decoder 215 or the set top box decoder 215 may be bypassed in the event that the display device 203 is a device, such as a high definition television, that includes its own decoder 240 (e.g., an MPEG decoder). In this case, the encoded display data output by the tunable radio signal receiver 209, the wireless receiver 211 or their respective conditional access devices 227, 228 is provided directly to the display interface 217. The display interface 217 in this case combines graphics or video streams so that the display device can perform simple combining, or more complex combining, such as blending and overlaying.

In a further embodiment, the set top box 201 includes the capability to transmit information over a wireless return link 271 to the local display data source 205. Such information may include acknowledgments of receipt of encoded display data transmitted by the local source 205 and/or display data received from the remote broadcast source that has been encoded for transmission to the local source 205. The additional elements necessary to provide such transmission capability are dependent upon the type of transmissions to be supported. For example, to support the transmission of acknowledgments of receipt only, the set top box 210 might include a wireless transmitter 236 and the duplexer/antenna switch 238. On the other hand, to support transmission of display data received from the remote broadcast source, the set top box 201 might include an encoder 234, a wireless transmitter 236, and the duplexer/antenna switch 238. If scrambled or encrypted transmissions are desired, the set top box 201 may further include a conditional access device 229 to introduce such scrambling or encryption. The duplexer/antenna switch 238 may be eliminated if both the forward and return wireless links 269, 271 are simplex links and appropriate isolation is provided between the wireless receiver 211 and the wireless transmitter 236.

To communicate acknowledgments of receipt to the local display data source 205, the wireless receiver 211 informs the central processor 207 over the bus 224 upon receiving a wireless signal from the local display data source 205. The central processor 207 then prepares an acknowledgment and instructs the wireless transmitter 236 to transmit the acknowledgment over the return wireless link 271 via the duplexer/antenna switch 238, if used, and the antenna 213 in accordance with known techniques. In this case, the bandwidth of the return link 271 may be much smaller (e.g., an order of magnitude smaller) than the bandwidth of the forward link 269 since only a minimal amount of data is communicated over the return link 271.

To communicate display data, such as display data received from the remote broadcast source, to the local display data source 205, the display data output of the decoder 215 (or at least that portion of the display data output containing a decoded representation of the encoded display data received by the tunable radio signal receiver 209) is provided to an encoder 234, such as an MPEG encoder. In a preferred embodiment, the display data to be provided to the local display source 205 is sourced from the display interface 217 so that the display data to be encoded by encoder 234 includes processing, such as scaling, blending, overlaying or other suitable operations, performed by the display interface 217 . The display data output by the display interface 217 is encoded in the encoder 234 and provided to the wireless transmitter 236, optionally via a conditional access device 229. Even when the broadcast signal transmitted from the remote broadcast source is not scrambled or encrypted, the decoded display data is re-encoded by encoder 234 instead of providing the encoded display data output of the tunable radio signal receiver 209 directly to the wireless transmitter 236 (or conditional access device 229) because the bandwidth of link 271 may be less than the bandwidth of link 210 or coding on link 210 may not be understood by device 205. In addition, local transmission may require scrambling or encryption (i.e., to avoid capture and transmission to the Internet).

After receiving the encoded display data from the encoder 234 (or the conditional access device 229), the wireless transmitter 236 formats the data into a wireless signal (e.g., RF, microwave, or optical signal) that complies with the transmission protocol of the return wireless link 271 and provides the wireless signal to the antenna 213 (optionally via the duplexer/antenna switch 238) for transmission to the local display data source 205 over the return wireless link 271. In this case, the return wireless link 271 is preferably symmetric with the forward wireless link 269 (e.g., has a bandwidth and other characteristics similar to the forward wireless link 269), although an asymmetric link may alternatively be used. Thus, the bandwidth of the return link 271 is preferably in the approximate range of 1-30 MHz, which is substantially less than the bandwidth of the link 225 between the set top box 201 and the display device 203.

With respect to the present invention, the local display data source's primary function is provide encoded display data to the set top box 201 for display on the display device 203; however, as described in detail below, the local display data source 205 may receive encoded display data from the set top box 201 for display on the local source's own display device 256. The local display data source 205 (e.g., a personal computer) generates its own display data for communication to the set top box 201 or retrieves such display data from some other source, such as the Internet (e.g., via modem 249). When the local source 205 generates its own display data (e.g., graphics data), the central processor 242 (e.g., an application running on the central processor 242) issues drawing commands to the graphics processor 248. The graphics processor 248 receives the drawing commands and renders graphics primitives in accordance with the commands. The primitives are stored temporarily in the frame buffer 246 and are read from the frame buffer 246 by the graphics processor 248 based on timing information issued by the central processor 242 over the bus 258. Generation of graphics in computers is well known; thus, no further discussion will be presented except to facilitate an understanding of the present invention. The graphics data read from the frame buffer 246 is provided to the encoder 250 by the graphics processor 248.

When the central processor 242 retrieves the display data (e.g., MPEG video data from an Internet web server) via its modem 249, the central processor 242 provides the display data to the encoder 250 if the display data is not already properly encoded (e.g., not MPEG encoded) or to the wireless transmitter 252 if the display data is already properly encoded. The local source 205 may optionally include a conditional access device 259 in its transmit path between the encoder 250 and the wireless transmitter 252. The conditional access device 259 may be included when the encoded display data is to be scrambled or encrypted to prevent unauthorized reception. When such a conditional access device 259 is included and encoding is not necessary, the central processor 242 provides the retrieved encoded display data to the conditional access device 259 for scrambling/encrypting.

The encoder 250 preferably encodes the display data received from either the graphics processor 248 or the central processor 242 in accordance with the encoding procedure used in the system 100. In the preferred embodiment, the encoder 250 encodes the received display data in accordance with any one of the various versions of the MPEG encoding specification. The encoder 250 provides the encoded display data to the conditional access device 259, if included, or to the wireless transmitter 252, when no conditional access device 259 is included. The wireless transmitter 252 processes the encoded signal received from the encoder 250 or the conditional access device 259 in accordance with known techniques (e.g., modulates, upconverts, filters and amplifies) to prepare a signal with appropriate formatting for transmission over the forward wireless link 269. The output of the wireless transmitter 252 is provided to the antenna 254, optionally via a duplexer/antenna switch 261, for propagation of the wireless signal over the forward wireless link 269 to the set top box 201. As mentioned above, both the forward and reverse wireless links 269, 271 are preferably RF, microwave, or optical (e.g., infrared) links having bandwidths in the range of approximately one to approximately thirty Megahertz. Accordingly, the wireless transmitters 236, 252 and the wireless receivers 211, 263 of the set top box 201 and the local display data source 205 are preferably RF, microwave, or optical transmitters and receivers, respectively.

In addition to sourcing display data to be displayed on the display device 203 coupled to the set top box 201, the local display data source 205 may optionally include appropriate hardware and software to enable the local source 205 to receive acknowledgments from the set top box 201 and/or receive and present display data received from the set top box 201. In this case, the local source 205 includes a wireless receiver 263, a decoder 267, a display interface 267, and a local display device 256. The local source 205 may also include a conditional access device 260 to perform de-scrambling and/or decryption in the event that the wireless signal communicated from the set top box 201 is scrambled and/or encrypted.

Wireless signals communicated over wireless link 271 are detected by antenna 254 and provided to the wireless receiver 263, optionally via a duplexer/antenna switch 261. The duplexer/antenna switch 261 is only necessary to facilitate duplex or half-duplex communications. When the wireless links 269, 271 are simplex links, the duplexer/antenna switch 261 is not necessary provided that sufficient isolation is provided between the wireless transmitter 252 and the wireless receiver 263. The wireless receiver 263 operates in accordance with known techniques (e.g., down-converts, demodulates, and filters) to extract acknowledgments or encoded display data from the received wireless signal. Extracted encoded display data is provided to the decoder 265 (via the conditional access device 260 when such a device is included). Extracted acknowledgments are provided to the central processor 242 preferably over the bus 258 or by some other conventional electrical path.

Similar to its set top box counterpart, the decoder 265 is preferably an MPEG decoder that decodes the extracted encoded display data in accordance with a select version of the MPEG decoding specification to recover the display data. The recovered display data is provided to the display interface 267 for processing prior to display. For example, the display interface 267 may scale the display data, blend the display data with other display data generated (e.g., in the graphics processor 248) or acquired (e.g., via the modem 249) by the local source 205, and/or overlay the display data with other display data generated or acquired by the local source 205. The processed display data is then provided to the local display device 256 for display to the local source user. The local display device 256 may form an integral part of the local display data source 205 (e.g., a liquid crystal display (LCD) of a laptop or notebook computer), or may be operably coupled (e.g., via a universal serial bus (USB) cable) to the local display data source 205 (e.g., a CRT monitor coupled to a personal computer).

Compression or encoding may be done in any suitable conventional manner. As described above, the present invention provides a video and/or graphics display system in which a set top box is configured to include a wireless receiver that receives encoded display data from a local source, such as a personal or laptop computer, in addition to including a conventional radio signal receiver for receiving remotely generated broadcast signals (e.g., cable signals or DBS signals). By including such a wireless receiver in the set top box, the set top box can display video and/or graphics data generated or acquired by the local source without requiring any cable or other hardware connections between the local source and the set top box and/or display device. Thus, a user can view his or her own computer-generated or acquired display data on the user's large HDTV screen together with a television show or movie by merely instructing the user's computer to transmit the display data over a wireless link using a PC card or internal wireless modem. Thus, the present invention permits system users to construct unique multi-media displays in the comforts of their own homes without the hassles of configuring a complex wireline network. Further, the present invention does not limit the use of one's television to Internet matters as does TV Internet services such as WEB TV. Rather, the present invention provides a means by which the user can use his or her own computer to access web sites and still use his or her television to watch cable or DBS television shows, while displaying both the television show and the web sites on the user's television display.

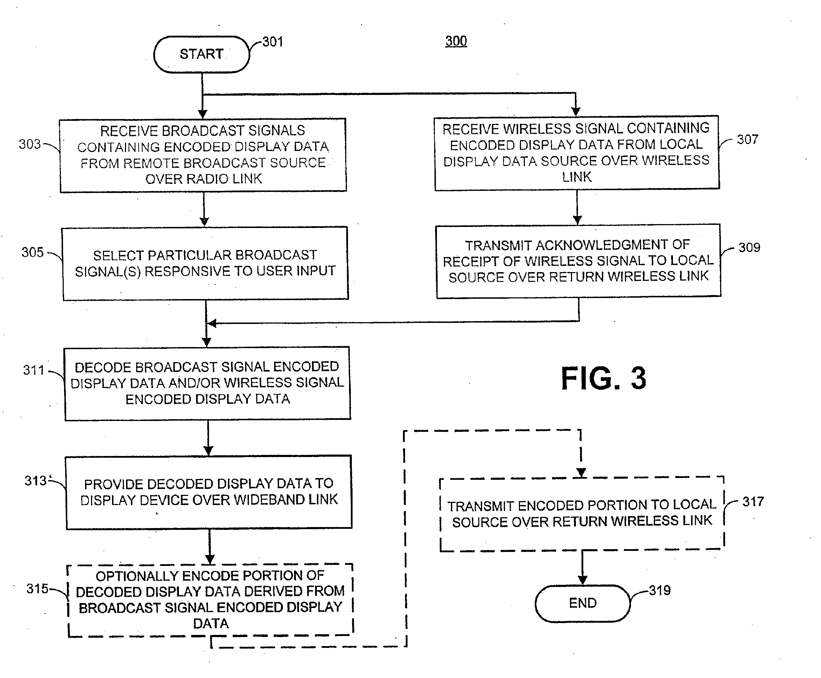

FIG. 3 is a logic flow diagram 300 of steps executed by a set top box to facilitate display of locally generated display data on a display device in accordance with a preferred embodiment of the present invention. The logic flow begins (301) when the set top box receives (303) broadcast signals containing encoded display data (video and/or graphics data) from a remote broadcast source over a radio communication link. Each broadcast signal preferably includes encoded video and/or graphics data communicated from a cable system headend or a DBS broadcast facility. The encoded data may have been encoded in accordance with any one of the various versions of the MPEG encoding specification or using any other known encoding technique (e.g., NTSC, PAL or SECAM). The broadcast signals may be scrambled or encrypted and, therefore, may require de-scrambling or decrypting through use of a conditional access device as discussed above with respect to FIG. 2. The communication link preferably has a bandwidth in the range of approximately five to approximately thirty Megahertz (i.e., about 5-30 MHz) to accommodate transmissions of multiple MPEG-encoded signals in separate channels. Thus, the communication link may be a conventional cable plant or DBS satellite transmission link.

After receiving the broadcast signals, the set top box selects (305) a particular one or more of the broadcast signals for display responsive to the set top box user's input. That is, the set top box tunes its broadcast radio receiver to receive one or more of the broadcast signals (e.g., one television channel or multiple television channels when the television or other display device include picture-in-picture capabilities). The tuning or selection is made responsive to the user's input of the desired television channel or channels, either through the set top box's user interface or through use of a remote control device, in accordance with conventional techniques.

In addition to receiving broadcast signals, the set top box also receives (307) a wireless signal from a local source over a wireless communication link. The wireless signal includes encoded display data, which may be one or more of encoded video data and encoded graphics data. For example, the set top box may receive MPEG-encoded graphics data to display a MICROSOFT WORD word processing window from the set top box user's or another user's laptop computer. Alternatively, the set top box may received MPEG-encoded video data (e.g., an MPEG-encoded video downloaded from the Internet) from the set top box user's personal computer such as described for example in copending application having attorney docket number 00100.00.0820, entitled "Wireless Display and Method", having inventors Edward G. Callway et al., filed on August 6, 2001, having serial number 09/923,768, incorporated in its entirety herein and owned by instant assignee. The wireless signal may also include codes or rendering commands, such as described for example in copending application having attorney docket number 00100.00.1350, entitled Wireless Device Method and Apparatus with Drawing Command Throttling Control," having inventors David Glen et al., filed on August 6, 2001 and having serial number 09/923,759, incorporated in its entirety herein and owned by instant assignee.

The wireless link preferably has a bandwidth in the range of approximately one to approximately thirty Megahertz (i.e., about 1-30 MHz) to accommodate transmissions of MPEG-encoded video signals. Consequently, the wireless link may be an RF, microwave or infrared link operating in accordance with one of a variety of known wireless transmission and networking standards, such as the IEEE 802.11 wireless LAN protocol standard or the HPNA 2.0 networking specification. Alternatively, the wireless link may have a lower bandwidth and operate in accordance with the Bluetooth transmission standard in the event that only static or pseudo-static graphics or highly compressed video will be communicated to the set top box.

After receiving the wireless signal from the local display data source, the set top box preferably transmits (309) an acknowledgment of receipt of the wireless signal to the local source over a return wireless link. The return link is preferably symmetric to the forward link from the local source to the set top box to facilitate communication of encoded video and/or graphics from the set top box to the local source (e.g., computer) as discussed in more detail below with respect to optional steps 315 and 317. However, if the return link is used only for control data, the link may be much narrower (e.g., an order of magnitude narrower) than the forward link. One of ordinary skill in the art will recognize that multiple acknowledgments may be sent by the set top box as the set top box receives portions of the transmitted video and/or graphics data from the local source. Step 309 is intended to take into account the transmissions of all such acknowledgments.

Once one or more of the broadcast signal and the wireless signal have been received, the set top box decodes (311) the encoded display data contained in one or preferably both of the signals to recover the display data contained therein. The decoding performed by the set top box must correspond to the encoding applied to the received display data. In the preferred embodiment, the display data is encoded in accordance with one of the various versions of the MPEG encoding specification (e.g., MPEG2). Accordingly, decoding is performed in accordance with any one of the various versions of the MPEG decoding specification or by using any other conventional decoding technique that can recover MPEG-encoded data. Alternatively, the display data may be encoded (and accordingly decoded) using some other analog encoding/decoding technique, such as NTSC, PAL OR SECAM. The determination as to whether to decode one or both of the signals is made responsive to the set top box user's input. For example, through use of the set top box user interface or a remote control device, the set top box user may instruct the set top box to display the display data contained in one or both of the broadcast and wireless signals. Also, the positioning of one set of display data (e.g., graphics from the local source) relative to the other set of display data (e.g., a movie from the remote broadcast source) and/or the display device screen is determined based on user input, although default positions may be stored in the central processor of the set top box. As discussed above with respect to FIG. 2, the set top box preferably includes a display interface that includes blending, overlay, scaling and other combining functionality.

After the set top box has decoded the received, encoded display data to recover the display data from one or both input signals, the set top box provides (313) the decoded display data (e.g., raw pixel data) to the display device over a wide bandwidth communication link. In a preferred embodiment, the display device is a high definition television set and the link between the set top box and the display device supports pixel data transmission rates in excess of one Gigabits per second (i.e., having a bandwidth greater than 1 GHz). Since the bandwidths of the links between the remote broadcast source and the set top box, and the local display data source and the set top box are substantially less than the bandwidth of the link between set top box and the display device, encoding is preferably used to compress the display data transmitted from the remote and local sources in order to maintain substantially symmetric throughput on all three links. For example, MPEG-encoded video or graphics data received form the local source over the wireless link at ten Megabits per second (Mbps) is preferably equivalent to the transfer of about 1.1 Gigabits per second (Gbps) of raw pixel data.

In addition to performing the operations described above with respect to steps 301-313, the set top box may be optionally configured with appropriate hardware and software to encode (315) a portion of the decoded display data derived from the selected broadcast signal's encoded display data. For example, the set top box user may desire that the graphics received during a football game broadcast be displayed in a window of the user's personal computer. To accommodate this request, the set top box preferably encodes the high quality, decoded graphics pixel data received from the remote broadcast source over the selected channel using a known encoding technique, such as one of the various versions of the MPEG encoding standard. Alternatively, if the set top box user desires to view all (i.e., the entire portion of) the video and/or graphics data received from the remote broadcast source on the user's personal computer, the set top box preferably encodes the high quality, decoded video and graphics pixel data received from the remote broadcast source using the selected encoding technique.

If some portion of the broadcast display data is encoded by the set top box in response to user input as in step 315, the set top box transmits (317) the encoded portion of the broadcast display data to the local source via the wireless return link, and the logic flow ends (319). In this case, as noted above, the wireless return link has a bandwidth preferably equal to the bandwidth of the wireless link used to communicate video and/or graphics display data from the local source to the set top box. Accordingly, the return link in this case preferably supports a transmission rate equivalent to the transmission rate of the forward link (i.e., local source-to-set top box). Thus, the return link may be an RF, microwave, or infrared link operating in accordance with one of a variety of known wireless transmission and networking standards, such as the IEEE 802.11 wireless LAN protocol standard or the HPNA 2.0 networking specification.

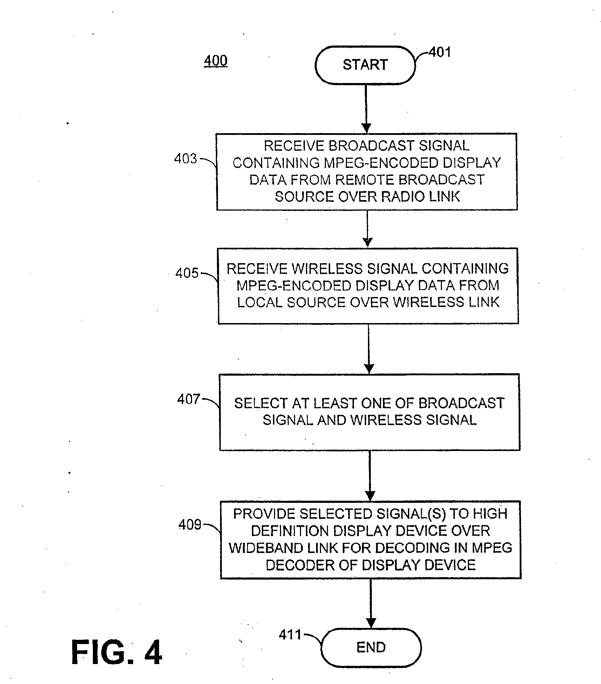

FIG. 4 is a logic flow diagram 400 of steps executed by a set top box to facilitate display of locally generated display data on a high definition display device in accordance with an alternative embodiment of the present invention. The logic flow begins (401) when the set top box receives (403) one or more broadcast signals from a remote broadcast source over a radio communication link (e.g., a cable plant). Each broadcast signal preferably includes MPEG-encoded display data, such as video data constituting scenes of a movie or a television show. In the event multiple broadcast signals are received simultaneously, the set top box may select one of the broadcast signals for processing and display in response to user input (e.g., via a user interface or a remote control device). In addition to receiving a broadcast signal, the set top box also receives (405) a wireless signal from a local source (e.g., a personal or laptop computer, or a PDA) over a wireless link. Similar to the broadcast signal, the wireless signal includes MPEG-encoded display data, such as encoded graphics data generated within the local source itself or encoded graphics and/or video data acquired by the local source over the Internet or some other wide area network.

After receiving both the wireless and broadcast signals, the set top box selects (407) at least one of the signals for display on the high definition display device. This selection is preferably responsive to input from the set top box user. For example, the user may want to display only one of the signals, or may want to display both signals (e.g., video received from the remote broadcast source overlaid with graphics generated in the local source). The set top box receives input from the user via a user interface (e.g., a keypad) or a remote control device (in which case, the set top box includes a remote control receiver as described above with respect to FIG. 2).

After one or both of the signals have been selected, the set top box provides (409) the MPEG-encoded display data contained in the selected signal or signals to the high definition display device over a wide bandwidth communication link, and the logic flow ends (411). In this embodiment, the MPEG decoder is implemented in the high definition display device and, therefore, decoding is not performed in the set top box. In a preferred embodiment, the bandwidth of the link between the set top box and the high definition display device is substantially greater than the individual bandwidths of the communication links between the remote broadcast and local sources and the set top box as discussed above with respect to FIG. 3. However, in this embodiment, the bandwidth between the set top box and the high definition display device may alternatively be on the same order of magnitude as the individual bandwidths of the communication links between the remote broadcast and local sources and the set top box because encoded display data is being provided to the display device instead of decoded, raw pixel data. Since encoded data is being provided on all the links, all the links may have similar bandwidths .

In this embodiment, the set top box serves as an intermediate device to facilitate selection between the received signals and to provide any processing, such as blending and/or overlaying, that may be necessary for both signals to be properly displayed when the user desires to view the display data of both signals. In addition, the set top box may include a wireless transmitter to allow the set top box user to direct MPEG-encoded display data received from the remote broadcast source to be forwarded to the local source for display on a display device (e.g., a computer screen or monitor) of the local source. Further, as in the other embodiments described herein, the set top box may also include other conventional features, such as conditional access (e.g., de-scrambling) and internal generation of graphics data requested by the set top box user.

The present invention encompasses a set top box and an associated method of operation that facilitate display of locally sourced display data on a display device operably coupled to the set top box. With this invention, a user can display locally generated or acquired display data together with remotely received broadcast display data on a single display device to create a user-specific multi-media environment. For example, with the present invention, the user can watch a television program received from a cable headend and simultaneously display a game downloaded from the Internet by the user's computer on the television monitor together with the television program, all without having to physically couple the computer to the set top box or television set. No prior art set top boxes provide such flexibility. Although WEB TV and other similar services allow a person's television set to be used as a monitor for purposes of Internet browsing, they do not allow both Internet data and locally broadcast data to be displayed simultaneously, and require service-specific hardware in addition to the person's computer and set top box. By contrast, the present invention allows both remote broadcast data and local display data received or generated by the user's wireless-compatible computer to be displayed simultaneously on a single display device without the need for service-specific hardware.

In the foregoing specification, the present invention has been described with reference to specific embodiments. However, one of ordinary skill in the art will appreciate that various modifications and changes may be made without departing from the spirit and scope of the present invention as set forth in the appended claims. Accordingly, the specification and drawings are to be regarded in an illustrative rather than a restrictive sense, and all such modifications are intended to be included within the scope of the present invention.

Benefits, other advantages, and solutions to problems have been described above with regard to specific embodiments of the present invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. As used herein and in the appended claims, the term "comprises," "comprising," or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus.

## Claims

1. A set top box (201) operably coupleable to a display device (203) via a first communication link (225), the set top box (201) comprising:
a radio signal receiver (209) that receives a broadcast signal from a remote broadcast source over a second communication link (210), the broadcast signal including first encoded display data;
a wireless receiver (211) that receives second encoded display data from a local source (205) over a third communication link (269);
at least one decoder (215), operably coupled to the wireless receiver (211) and the radio signal receiver (209), that decodes at least one of the first encoded display data to produce first display data and the second encoded display data to produce second display data; and
a display interface (217), operably coupled to the decoder (215), that provides the first display data and the second display data to the display device (203) over the first communication link (225).

2. The set top box (201) of Claim 1, including:
an encoder (234), operably coupled to the decoder (215), that encodes the first display data to produce third encoded display data; and
a wireless transmitter (236), operably coupled to the encoder (234), that transmits the third encoded display data over a fourth communication link (271) to the local source (205), the fourth communication link (271) having a bandwidth substantially less than a bandwidth of the first communication link (225).

3. The set top box (201) of Claim 2, wherein the encoder (234) encodes the first display data in accordance with a Motion Picture Experts Group (MPEG) encoding specification.

4. The set top box (201) of Claim 2 or Claim 3, wherein the wireless transmitter (236) comprises at least one of an optical transmitter, a radio frequency transmitter, and a microwave transmitter.

5. The set top box (201) of any one of the preceding claims, wherein the at least one decoder (215) decodes the first encoded display data and the second encoded display data in accordance with a Motion Picture Experts Group (MPEG) decoding specification.

6. A set top box (201) that is operably coupleable to a display device (203) via a first communication link (225), the display device (203) including a decoder (240) for decoding encoded display data, the set top box (201) comprising:
a radio signal receiver (209) that receives a broadcast signal from a remote broadcast source over a second communication link (210) to produce a received broadcast signal, the broadcast signal including first encoded display data;
a wireless receiver (211) that receives second encoded display data from a local source (206) over a third communication link (269); and
a display interface (217), operably coupled to the radio signal receiver (209) and the wireless receiver (211), that provides the first encoded display data and the second encoded display data to the display device via the first communication link (225).

7. The set top box (201) of any one of the preceding claims, wherein the wireless receiver (211) comprises at least one of an optical receiver, a radio frequency receiver, and a microwave receiver.

8. The set top box (201) of any one of the preceding claims, wherein the first display data includes at least one of graphics data and video data.

9. The set top box (201) of any one of the preceding claims, wherein the second display data includes at least one of graphics data and video data.

10. The set top box (201) of any one of the preceding claims, wherein the radio signal receiver (209) comprises one of a cable television receiver and a direct broadcast satellite receiver.

11. The set top box (201) of any one of the preceding claims, wherein the third communication link (269) has a bandwidth that is substantially less than a bandwidth of the first communication link (225).

12. The set top box (201) of any one of the preceding claims, wherein the second communication link (210) has a bandwidth that is substantially less than the bandwidth of the first communication link (225).

13. The set top box (201) of Claim 12 when dependent upon Claim 11, wherein the bandwidth of the first communication link (225) is greater than one Gigahertz, wherein the bandwidth of the second communication link (210) is in a range of approximately five to approximately thirty Megahertz, and wherein the bandwidth of the third communication link (269) is in a range of approximately one to approximately thirty Megahertz.

14. The set top box (201) of any one of the preceding claims, wherein the received broadcast signal comprises one of a cable television signal and a direct broadcast satellite signal.

15. The set top box (201) of any one of the preceding claims, wherein the radio signal receiver (209) selectively receives the broadcast signal responsive to a control signal, the set top box (201) further including at least one of a remote control receiver (223) that receives the control signal from a user of the set top box (201).

16. The set top box (201) of Claim 15, wherein the control signal comprises a wireless signal transmitted from a wireless remote control device (221).

17. The set top box (201) of any one of the preceding claims, wherein the first encoded display data and the second encoded display data comprises data encoded in accordance with a Motion Picture Experts Group (MPEG) encoding specification.

18. The set top box (201) of any one of the preceding claims, including:
a wireless transmitter (236), operably coupled to the wireless receiver (211), that transmits an acknowledgement of receipt of the second encoded display data to the local source (205) over a fourth communication link (271).

19. The set top box (201) of any of the preceding claims, including:
a wireless transmitter (236), operably coupled to the radio signal receiver (209), that transmits the first encoded display data over a fourth communication link (271) to the local source (205).

20. The set top box (201) of Claim 18 or Claim 19, wherein the wireless transmitter (236) comprises at least one of an optical transmitter, a radio frequency transmitter, and a microwave transmitter.

21. A wireless display system comprising:
a local display data source (205) including:
a central processor (242) that issues drawing commands to draw graphics primitives:
a graphics processor (248), operably coupled to the central processor (242), that receives the drawing commands and renders the graphics primitives to produce a graphics data stream;
an encoder (250), operably coupled to the graphics processor, that encodes the graphics data stream to produce second encoded display data; and
a wireless transmitter (252), operably coupled to the encoder (250), that transmits the second encoded display data over a third communication link (269); and
a set top box according to any one of the preceding claims.

22. The wireless display system of Claim 21, wherein the set top box (201) further comprises:
an encoder (234), operably coupled to the at least one decoder (215) that encodes the decoded display data in the event that the decoded display data includes a decoded representation of the first encoded display data to produce re-encoded display data; and
a wireless transmitter (236), operably coupled to the encoder (234), that transmits the re-encoded display data to the local graphics source via a fourth communication link (271); and
wherein the local graphics source further comprises:
a wireless receiver (263) that receives the re-encoded display data from the set top box (201) over the fourth communication link (271);
a decoder (265), operably coupled to the wireless receiver (263), that decodes the re-encoded display data to produce decoded display data; and
a display (267), operably coupled to the decoder (265), that provides the second decoded display data to a second display device (256) operably coupled to the local graphics source.

23. The wireless display system of Claim 21 or Claim 22, wherein the local graphics source comprises one of a personal computer, a laptop computer, a palmtop computer, and a personal digital assistant.

24. The wireless display system of any one of Claims 21 to 23, wherein the wireless transmitter is implemented on an insertable personal computer card.

25. A method for a set top box (201) to facilitate display of locally sourced display data on a display device (203) operably coupled to the set top box (201), the method comprising the steps of:
receiving a broadcast signal from a remote broadcast source over a second communication link (210), the broadcast signal including first encoded display data;
receiving second encoded display data over a third communication link (269) from a local source;
decoding at least one of the first encoded display data and the second encoded display data to produce display data; and
providing the decoded display data to the display device (203) over a first communication link (225).

26. The method of Claim 25, including the steps of:
encoding at least a portion of the decoded display data in the event that the decoded display data includes first encoded display data to produce second encoded display data; and
transmitting the second encoded display data to the local source over a fourth communication link (271).

27. The method of Claim 26, wherein the step of encoding comprises the step of encoding at least a portion of the decoded display data in accordance with a Motion Picture Experts Group (MPEG) encoding specification.

28. The method of any one of Claims 25 to 26, wherein the step of decoding comprises the step of decoding at least one of the first encoded display data and the second encoded display data in accordance with a Motion Picture Experts Group (MPEG) decoding specification.

29. A method for a set top box to facilitate display of locally sourced display data on a high definition display device coupled to the set top box, the high definition display device including a decoder that decodes in accordance with a Motion Picture Experts Group (MPEG) decoding specification, the method comprising the steps of:
receiving a broadcast signal from a remote broadcast source over a first communication link, the broadcast signal including first MPEG-encoded display data;
receiving a wireless signal from a local source over a second communication link, the wireless signal including second MPEG-encoded display data;
selecting at least one of the broadcast signal and the wireless signal to produce at least one selected signal; and
providing the at least one selected signal to the high definition display device over a third communication link for decoding by the decoder, wherein the third communication link has a bandwidth that is substantially greater than individual bandwidths of the first communication link and the second communication link.

30. The method of any one of Claims 25 to 29, including the step of:
transmitting an acknowledgement of receipt of the second encoded display data to the local source over a fourth communication link (271).

31. The method of any one of Claims 25 to 30, including the step of:
selecting the broadcast signal from a plurality of broadcast signals received from the remote broadcast source in response to a control signal received from a user of the set top box (201) via one of a wireless remote control receiver and a user interface of the set top box (201).

32. The method of any one of Claims 25 to 31, wherein the second communication link (210) has a bandwidth that is substantially less than a bandwidth of the first communication link (225).

33. The method of any one of Claims 25 to 32, wherein the third communication link (269) has a bandwidth that is substantially less than the bandwidth of the first communication link (225).

34. The method of Claim 33 when dependent upon Claim 32, wherein the bandwidth of the second communication link (210) is in a range of approximately five to approximately thirty Megahertz, wherein the bandwidth of the third communication link (269) is in a range of approximately one to approximately thirty Megahertz, and wherein the bandwidth of the first communication link (225) is greater than one Gigahertz.
